# EUROPEAN PATENT APPLICATION

(11) **EP 4 002 328 A1**
(43) Date of publication of application: **25.05.2022**
(21) Application number: 21205698.0
(22) Date of filing: 29.10.2021
(51) Int. Cl.: G09B 9/00, G05B 19/048

(54) **ARTIFICIAL ASSISTANCE METHOD, RELATED DEVIDE AND SYSTEM**

(30) Priority: 19.11.2020 IT 202000027759
(71) Applicant: Morpheos S.r.l., 95027 San Gregorio di Catania (CT) (IT); Xenia Progetti S.r.l., 95021 Aci Castello (CT) (IT); Università degli Studi di Catania, 95131 Catania (IT)
(72) Inventor: Farinella, Giovanni Maria, 95131 Catania CT (IT); Furnari, Antonino, 95131 Catania CT (IT); Ragusa, Francesco, 95131 Catania CT (IT); Ragusa, Emanuele, 95021 Aci Castello CT (IT); Sorbello, Giuseppe Gerardo, 95021 Aci Castello CT (IT); Lopes, Antonino, 95021 Aci Castello CT (IT); Santo, Luciano, 95021 Aci Castello CT (IT); Samarotto, Marina, 95021 Aci Castello CT (IT); Scarso, Edoardo, 95027 San Gregorio di Catania CT (IT); Scarso, Bartolo, 95027 San Gregorio di Catania CT (IT)
(74) Representative: Perani & Partners S.p.A.

(57) **Abstract**

A method of artificial assistance (100) to a user (10) by means of an artificial assistance device (1000) wearable by the user (10) and comprising a set of sensors (1010) configured to acquire information from an environment (20) and information related to the user (10) and an augmented reality viewer (1020); said method (100) comprising the steps of: acquiring (110) by means of the set of sensors (1010) for each acquisition time instant a first data set related to the environment (20) and a second data set related to the user (10); sending (120) the first data set and the second data set to a data processing unit (1030) in signal communication with the device (1000); generating (130) as a function of the first data set and the second data set by means of algorithms resident in the data processing unit (1030) a set of action signals representative of a prediction of the user's interaction with the environment (20) at a time instant following the acquisition time instant; determining (160) an interaction instruction with the environment (20) as a function of the set of action signals; showing (170a) the interaction instruction on the augmented reality viewer (1020).

## Description

### Technical field

The present invention relates to a method of artificial assistance to a user capable of supporting the user in different activities, both work and non-work, as well as for alerting the user with the prediction of any hazards which may occur in the future. The object of the present invention is also a device for artificial assistance and a system for artificial assistance.

### Background art

Various types of wearable devices are known from the state of the art, such as glasses and/or visors, but also mobile devices such as smartphones which support the user in different work activities as well as allow the implementation of a video game component. Such devices propose simple augmented reality which as a function of the visual field of the user project, according to known algorithms, additional elements positioned in the environment which in that instant the user is observing such as a video or a map or a false screen for the user's selection of a given application.

For example, document US2018190020 describes a predictive augmented reality system based on the use of a device provided with a display capable of tracking the wearer's interactions with augmented reality content proposed on the display. Specifically, document US2018190020 describes the user's interaction with augmented reality content (not present in the environment surrounding the user but only virtual) visible from the display. Based on such user interactions with the augmented reality content, the system envisages determining a context of the interactions. Based on this context of interactions, a behavioural analysis of the user of the device is developed and lastly it is possible to generate a predictive model of the behaviour of the user of the device at a virtual level.

### Problems of the Prior Art

Therefore, the devices of the known art act substantially in a passive manner by projecting what is desired by the user and chosen through an application or a program. In fact, the interactions which the user has with the augmented reality content are present and visible by the user wearing the relative device. Specifically, as described in document US2018190020, the interactions which the user has with the augmented reality content projected on the display of the device are virtual. Moreover, the management of user localization, in the known art, and therefore his virtual interactions depend on the virtual objects themselves projected in augmented reality. As anticipated, this fact constrains the user and his location to a virtual environment which is different from the environment in which he is actually positioned, making it difficult if not impossible to interact with it in an accurate, safe and concrete manner.

### Object of the Invention

The object of the invention in question is to obtain a method, a device and a system capable of overcoming the drawbacks of the prior art mentioned above.

In particular, it is an object of the present invention to provide a method capable of assisting, preferably virtually, with artificial assistance, a user to interact in an optimized manner with the environment, also in order to improve safety, providing risk interactions, and the efficiency of the user himself.

The mentioned technical task and the specified aims are substantially achieved by a method for artificial assistance, a device and a system comprising the technical features set out in one or more of the appended claims.

### Advantages of the invention

Advantageously, the method, device and system of the present invention make it possible to recognize the scene and locate the user, monitor the objects used by the user, recognize and anticipate the user's interactions with objects and the actions performed by the user. It is thereby possible to improve user and object safety, energy saving, support in the teaching/training for the activities carried out and the verification of the correctness of the procedures performed by the user to ensure the quality of the processes and the products. It should be noted that such interactions with objects and with the environment are of the concrete and direct (real) type in the (real) environment in which the user is positioned

Advantageously, the method, device and system of the present invention allow to adopt context and object aware computing rules for the better management of spaces and to reduce the margins of errors in the activities carried out.

Advantageously, the method, the device and the system of the present invention allow to monitor the use (and consequently monitor the wear and need for recalibration) of the instrumentation with the consequent reduction of maintenance times of the instrumentation and incentivising maintenance interventions only when necessary and consequently prolonging the duration of the operational use of the instrumentation.

Advantageously, the method, the device and the system of the present invention allow to reduce the risk of injury by means of artificial intelligence technologies useful for anticipating the user's actions and interactions with objects and instruments.

Advantageously, the method, the device and the system of the present invention allow for energy savings given by the activation of the instrumentation only in the event of its next use and/or presence of the operator in the context of the instrumentation, with an impact on cost reduction.

Advantageously, the method, the device and the system of the present invention allow to reduce the users' training times, with an impact on the reduction of training costs.

Advantageously, the method, the device and the system of the present invention allow to verify procedures in order to improve the quality of the process for a user's carrying out of activities.

Advantageously, the method, the device and the system of the present invention allow remote communication between users.

Advantageously, the method, the device and the system of the present invention allow to make automation and collaborative robotics scenarios in which there is an interaction between man and machine, with an impact on innovation and improvement of process procedures.

### BRIEF DESCRIPTION OF THE FIGURES

Further features and advantages of the present invention will become more apparent from the description of an exemplary, but not exclusive, and therefore non-limiting preferred embodiment of a method, a device and a system for artificial assistance, as illustrated in the accompanying drawings, in which:
- figure 1 shows a block diagram of the method of artificial assistance according to an embodiment of the present invention;

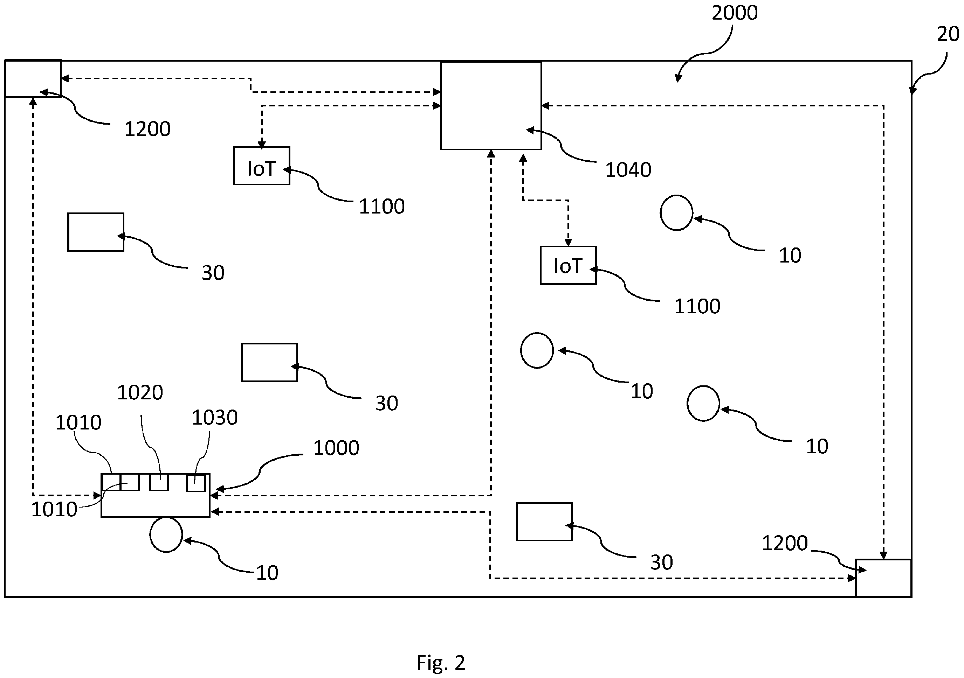

- figure 2 shows a schematic view from above of a system for artificial assistance in accordance with an embodiment of the present invention inserted in an environment.

### DETAILED DESCRIPTION

Even if not explicitly highlighted, the individual features described with reference to the specific embodiments shall be understood as accessory and/or interchangeable with other features, described with reference to other embodiments.

The present invention relates to an Egocentric Navigator for Industrial Guidance, Monitoring and Anticipation (ENIGMA) able to anticipate the interactions and/or actions which the user will have with the environment and support the user himself in the interactions and/or actions with objects and/or with the environment. It should be noted that the interactions and/or actions are anticipated and are not to be understood as real interactions and/or actions in the environment in which the user is inserted (for example actions and/or iterations with physical objects present in the environment and/or with the environment itself). For example, such an invention is applied in an industrial context to improve safety at work for the user, but it can also be applied in other areas such as training or in the operating theatre. The advantages of the present invention, as explained in detail below, are possible by virtue of navigation in environments and guidance, monitoring and anticipation.

Specifically, the present invention comprises a method of artificial assistance 100, an artificial assistance device 1000 and an artificial assistance system 2000.

The present invention relates to a method of artificial assistance 100 to a user 10 interacting with an environment 20 in which he is inserted. Specifically, the method 100 is focused on actual actions and/or interactions with an environment 20 and/or with objects present in the environment 20.

Preferably, the user 10 interacts physically/directly with the environment 20 in which he is inserted, for example with physical objects and/or with the environment itself. More preferably, the method of artificial assistance is obtained by means of an artificial assistance device 1000 wearable by the user 10. It should be understood that the device 1000 allows to process the information from the environment and/or from a context in which the user 10 is located (for example a place where he is and/or the operations which he must perform) and to provide the user with feedback, as clarified below, with indications to be followed to really interact with the environment and/or physical objects.

The artificial assistance device 1000, also an object of the present invention, comprises at least one set of sensors 1010 configured to acquire information related to the environment 20 and information related to the user 10.

Preferably, the set of sensors 1010 is configured to acquire a first data set related to the environment 20 and a second data set related to the user 10.

For the purposes of the present invention, information related to the environment 20 comprises objects 30 arranged in the environment as well as information related to the environment itself as places of interest or otherwise. It should be noted that the objects 30 can be physical objects arranged in the environment 20 with which the user 10 can interact (directly by means of method indications: by acting on the objects 30 themselves and/or by receiving/sending information/commands). Preferably, the objects 30 comprise IoT (Internet of Things) devices 1100 in signal communication with the same artificial assistance device 1000. More preferably, the IoT devices 1100 are in signal communication with a control unit 1040 in turn in signal communication with the artificial assistance device 1000. In particular, the control unit is configured to mediate the interaction between the IoT devices 1100 and the artificial assistance device 1000. It should be noted that the first data set can comprise information sent by the IoT devices which can for example be sensors arranged in the environment 20 and of the type described below. In other words, the first data set comprises information sent by the same objects 30, such as IoT devices.

More preferably, the objects 30 also comprise elements of daily life, for example, present in a business, home, shipyard or workshop environment.

It should be noted that, as will be clarified below, the information related to the environment 20 comprises information related to the same (e.g., places of interest) with which the user 10 can interact directly (e.g., by moving within and/or going from one place to another).

For the purposes of the present invention, the information related to the user 10 comprises current and future information regarding the location of the user in the environment 20 (regardless of the positioning of the objects in the environment and/or augmented reality), the relative position of the user 10 with respect to one or more objects 30 arranged in the environment 20, one or more interactions of the user 10 with the environment 20 or with the objects 30, the actions of the user 10 in the environment 20.

In accordance with a preferred embodiment, the set of sensors 1010 is configured to acquire information such as audio, video, depth, thermal, geolocation and/or gestures of the environment 20 and of the user 10 as well as direct information from the IoT devices 1100 arranged in the environment 20 for the detection of data representative of possible health risks. Thus, the set of sensors 1010 is selected from video, audio, IMU, gazebo, gyroscope, GPS, thermal, depth, infrared, gesturing, hand pose, head pose, human pose, environmental sensors for detecting gases, fumes, fine dust, particulate matter, or a combination thereof. Such sensors also comprise communication modules configured to put the IoT devices 1100 in signal communication with the artificial assistance device 1000.

Preferably, the artificial assistance device 1000 comprises an augmented reality viewer 1020 configured to allow the user to see an augmented reality. It should be noted that the artificial assistance device 1000 allows both augmented reality and mixed reality vision by means of the augmented reality viewer 1020.

In accordance with an embodiment of the present invention, a data processing unit 1030 is in signal communication with the artificial assistance device 1000. In particular, the data processing unit 1030 is configured to perform one or more algorithms in accordance with the steps of the method and to perform the steps of the method themselves.

Preferably, the artificial assistance device 1000 comprises the data processing unit 1030. In accordance with an alternative embodiment, the artificial assistance device 1000 comprises a communication module, not illustrated, in signal communication with the data processing unit 1030 arranged in a remote position with respect to the artificial assistance device 1000. The communication module is configured to send the acquired data set to the data processing unit and to receive in turn a plurality of data, as better illustrated below, generated by the data processing unit 1030. Thereby the onerous part of the data processing is delegated to an external unit with respect to the artificial assistance device 1000.

In accordance with a preferred embodiment, each artificial assistance device 1000 comprises an interaction module configured to put in signal communication one or more artificial assistance devices 1000, preferably worn by users 10 present in the environment 20 and electronic devices such as mobile phones and/or computers associated with users also external to the environment 20. Optionally, each artificial assistance device 1000, by means of the interaction module, is in signal communication with the control unit 1040 which in turn puts one or more artificial assistance devices 1000 in signal communication with each other. Preferably, the control unit 1040 is also configured to put the electronic devices in signal communication with one or more artificial assistance devices 1000. Thereby, remote communication is made possible between users 10 wearing an artificial assistance device 1000 and/or users associated with electronic devices also external to the environment.

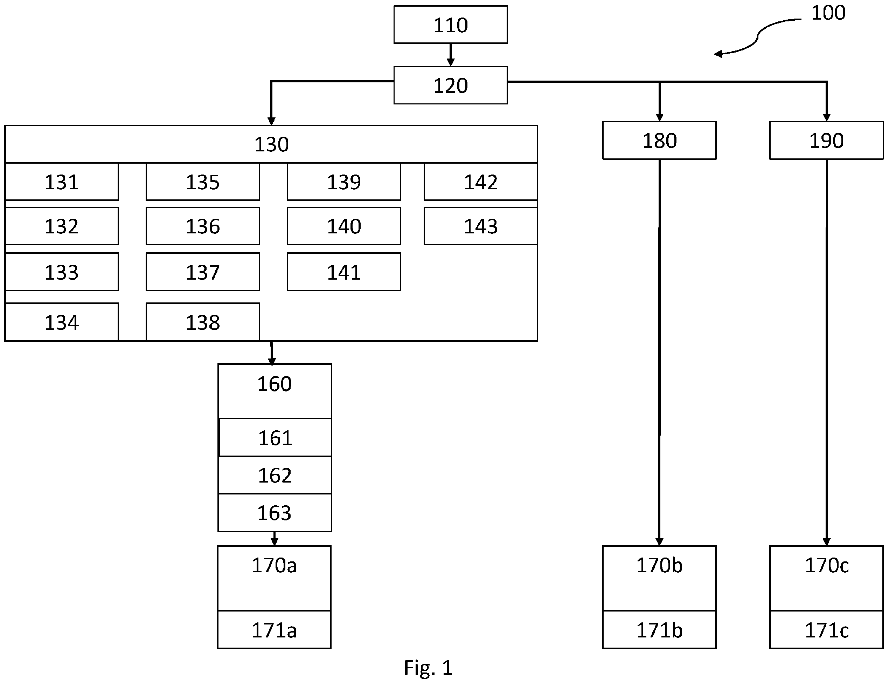

The method of artificial assistance 100 object of the present invention comprises the following steps, performed according to a preferred embodiment and shown in figure 1.

The method of artificial assistance comprises the step of acquiring 110 by means of the set of sensors 1010 for each acquisition time instant a first data set related to the environment 20 and a second data set related to the user 10. Preferably, the method includes continuously acquiring, from switching on, the first data set and the second data set.

The method of artificial assistance 100 comprises the step of sending 120 the first data set and the second data set to the data processing unit 1030 in signal communication with the device 1000.

The method of artificial assistance comprises the step of generating 130 as a function of the first data set and the second data set by means of algorithms resident in the data processing unit 1030 a set of action signals representative of a prediction of the action and/or interaction of the user 10 with the environment 20 at a time instant following the acquisition time instant. Specifically, the generating step 130 allows to anticipate the action and interaction of the user 10 with the environment.

In particular, the algorithms resident in the data processing unit 1030 as a function of the data sets, preferably multimodal (e.g., video signals, IMUs, GPS, etc.) is configured to extract discriminatory features. Such features, together with any other environmental signals acquired with IOT devices (fumes, gases, fine powders, particulates) are subsequently automatically processed and classified to interpret the context in which the user 10 is inserted.

For the purposes of the present invention, action and interaction with the environment 20 means the action of the user 10 in the environment 20, the interaction with the objects 30 arranged in the environment 20 but also interaction with the environment itself. Specifically, action and/or interaction means an actual action/interaction between user 10 and environment 20 and/or between user 10 and objects 30. In detail, action and interaction with the environment 20 means a concrete and direct action/interaction (e.g., physical or signal) with physical objects present in the environment and/or with the environment itself. For example, action and/or interaction can mean a movement/positioning/localization/passage of the user within the environment and/or an act (grasp/touch) on a physical object arranged in the environment by the user and/or the sending/receiving of information/commands to/from physical objects present in the environment and/or to/from the environment itself.

For these reasons, important zones are defined within the environment 20 by an algorithm resident in the data processing unit 1030 and/or by a user. In other words, the important zones are determined and saved in the data processing unit. Such important zones define the spaces within the environment 20 in which the user can move and interact. By way of example, such important zones may be environments within a building, exit or entrance routes, processing areas, security areas or refreshment areas, as well as areas in the context of specific objects (e.g., area in which a control panel or electrical panel is present).

In accordance with a preferred embodiment, the step of generating a set of action signals 130 comprises the steps of recognizing 131 at the acquisition time instant one or more objects 30 present in the environment 20 as a function of the first data set. Subsequently, the step of generating a set of action signals 130 comprises the step of determining 132 at the acquisition time instant a relative position between the user 10 and the one or more recognized objects 30 as a function of the second data set. Once the objects 30 present in the environment 20 are recognized and the relative position of the user 10 with respect to said objects 30 is determined, the step of generating a set of action signals 130 includes determining 133 a future position between the user 10 and the one or more recognized objects 30 relative to the time instant following the acquisition time instant. In particular, the step of determining 133 a future position includes anticipating the position between the user 10 and the one or more objects 30 at a time instant following the data acquisition time instant. Finally, the step of generating a set of action signals 130 comprises the step of associating 134 the determined future position with the action signals so as to process it in subsequent steps.

In accordance with a preferred embodiment, the step of generating a set of action signals 130 comprises the step of identifying 135 at the acquisition time instant a reference point PR present in the environment 20 as a function of the first data set. Subsequently, the step of generating a set of action signals 130 comprises the step of determining 136 at the acquisition time instant a location of the user 10 with respect to the identified reference point PR. Once the location of the user at the acquisition time instant has been determined, the step of generating a set of action signals 130 includes determining 137 a future location of the user with respect to the reference point PR related to the time instant following the acquisition time instant. Thereby, the method not only determines the user's position at the acquisition time instant but is also able to anticipate the user's position at a time instant following the acquisition time instant. Finally, the step of generating a set of action signals 130 includes associating 138 the determined future location with the action signals so as to process it in the subsequent steps.

In accordance with a preferred embodiment, the step of generating a set of action signals 130 comprises the step of recognizing 139 at the acquisition time instant a type of action and/or interaction of the user 10 with the environment 20 among a plurality of types of reference actions and/or interactions as a function of the first data set and the second data set. Preferably, the type of action and interaction with the environment 20 comprises user interactions in the environment and/or with the objects 30 arranged in the environment itself. For the purposes of the present invention, as already mentioned, action and/or interaction with the environment 20 by the user means not only his movements within the environment itself but the actions and interactions which the user has with the objects 30 arranged and recognized in the environment itself 20. Preferably, interaction with the environment 20 by the user not only means his actual and concrete movements within the environment itself, but the actual actions and interactions (direct and concrete interaction, e.g., grasping/touching a physical object or in signal communication, e.g., receiving/sending information/commands) which the user has with the objects 30 arranged and recognized in the environment 20 itself. Once the action and/or interaction at the acquisition time instant has been determined, the step of generating a set of action signals 130 includes determining 140 a future action and/or interaction of the user 10 with the environment 20 related to the time instant following the acquisition time instant. Thereby, the method not only determines the type of action and/or interaction at the acquisition time instant but is able to anticipate the action and/or interaction which the user must have with the environment 20 at a time instant following the acquisition time instant. Finally, the step of generating a set of action signals 130 includes associating 141 the determined future action and/or interaction with the action signals.

In accordance with a preferred embodiment, the step of generating a set of action signals 130 comprises the step of receiving 142 a set of reference instructions in the data processing unit 1030. Preferably, the reference instructions comprise a list of actions and interactions with the environment 20, objects 30 as well as with the IoT devices which the user must perform for a given activity. More preferably, the reference instructions comprise threshold actions and interactions with the environment 20, objects 30 as well as with the IoT devices so as to generate an alarm signal when exceeded.

In detail, the method of artificial assistance 100 comprises the step of reporting a hazard to the user 10 as a function of the first data set and the second data set and preferably as a function of reference instructions. In particular, the step of signalling a hazard to the user 10 includes generating an alarm signal. It should be noted that if an alarm signal is detected, the step of generating a set of action signals 130 includes associating safeguard instructions with the set of action signals for the user, for example indicating an exit route and/or an approaching obstacle. Thereby, the method allows to anticipate an imminent hazard to the user 10, indicating the action and/or interaction with the objects 30 and/or the environment 20 to be carried out and/or to be avoided in order to prevent risks. Preferably, the step of signalling a danger to the user 10, in the presence of an alarm signal, includes sending an activation signal to alarm devices 1200, belonging to the artificial assistance system 2000, as described below, arranged in the environment 20. Such alarm devices 1200 are configured to generate an environmental alarm signal and, therefore, alert one or more users 10 present in the environment.

It is thereby possible to improve user safety and optimize the activities carried out. In particular, the step of receiving 142 a reference set of instructions can be conducted by a user interface preferably associated with the artificial assistance device 1000 and/or by an update/load module associated with the data processing unit. Finally, the step of generating a set of action signals 130 comprises the step of generating 143 the set of action signals as a function of the set of reference signals, the first data set and the second data set. Thereby, the generation of the set of action signals takes into account the environment 20, the user 10 and reference instructions to optimize the generation process in a prediction.

Advantageously, the method of artificial assistance 100 is characterized by distinctiveness and detectability as it allows to anticipate the actions and interactions between the user 10 wearing the artificial assistance device 1000 and the environment 20 generating the action signals.

Advantageously, the method of artificial assistance 100 is characterized by stability. In fact, the method of artificial assistance 100 is independent of the user and does not require periodic interventions which depend on the user who uses it.

In accordance with a preferred embodiment, the method of artificial assistance comprises the step of generating 180 as a function of the first data set and the second data set by means of algorithms resident in the data processing unit a set of environment signals representative of the environment 20 at the acquisition time instant. Preferably, the step of generating 180 environment signals includes the recognition of the objects 30 arranged in the environment 20 and in the important zones defined in the environment 20. More preferably, the step of generating 180 environment signals includes locating the objects 30 in the environment 20. In other words, the generated environment signals comprise object recognition information 30 and preferably comprise spatial information about the recognized objects 30. The environment signals further comprise information sent by the same objects 30, such as IoT devices.

Preferably, the method of artificial assistance 100 comprises the step of showing 170b the set of environment signals on the augmented reality viewer 1020. More preferably, the step of showing the determined environment signals on the augmented reality viewer 170b comprises the step of projecting 171b the environment signals onto the augmented reality viewer 1020. In particular, the projecting step 171b includes identifying, surrounding and/or indicating one or more objects 30 present in the environment and the important zones.

In accordance with a preferred embodiment, the method of artificial assistance comprises the step of generating 190 as a function of the first data set and the second data set by means of algorithms resident in the data processing unit a set of action and/or interaction signals representative of one or more user interactions 10 with the environment 20 related to the acquisition time instant. Preferably, the method of artificial assistance comprises the step of showing 170c the environment signal set on the augmented reality viewer 1020. More preferably, the step of showing the determined interaction signals on the augmented reality viewer 170c comprises the step of projecting 171c the interaction signals onto the augmented reality viewer 1020. In particular, the projecting step 171c includes signalling to the user the action and/or interaction in progress at the acquisition time instant. It should be noted that such an action and/or interaction can be defined with an object and/or one or more important zones.

The method of artificial assistance 100 comprises the step of determining 160 an action and/or interaction instruction with the environment 20 as a function of the set of action signals. As previously reported, an action and/or interaction instruction with the environment 20, is to be understood for the purposes of the present invention as an instruction for a real action and/or interaction with the environment 20 (specifically with physical objects or with the environment itself). In detail, an instruction for a real action and/or interaction with the environment 20 includes instructions to interact directly (physically and/or via signal) with the environment 20 (objects and/or environment itself) which the user can perform.

Preferably, the step of determining an interaction instruction 160 includes determining the action and/or the interaction instruction based on the set of action and/or interaction signals combined with the first data set and the second data set. More preferably, the step of determining an action and/or interaction instruction 160 includes determining the action and/or interaction instruction as a function of the set of action and/or interaction signals combined with the first data set, the second data set, the set of environment signals, the set of action and/or interaction signals, or a combination thereof. Still more preferably, the step of determining an interaction instruction 160 includes determining the action and/or interaction instruction as a function of the set of action and/or interaction signals combined with the first data set, the second data set, the set of environment signals, the set of action and/or interaction signals, the reference instructions, or a combination thereof.

Advantageously, the action and/or interaction instructions allow the user to give commands to the IoT devices, interact with the objects 30 and/or receive information related to safety and/or the activities carried out as well as to move within the environment between the important zones.

In accordance with a preferred embodiment, the step of determining an interaction instruction 160 comprises the step of drawing up 161 a list of actions to be taken by the user 10 as a function of the set of action signals. It should be noted that the list of actions which the user 10 must take comprises a list of actions with the environment 20, for example moving from one important zone to another, and with the objects 30 as well as with the IoT devices 1100. Preferably, the list of actions which the user 10 must take is a list of real actions to be actually performed with the environment 20 and/or with the objects 30. In accordance with an alternative embodiment and combinable with the foregoing, the step of determining an action and/or interaction instruction 160 comprises the step of drawing up a list of actions which the IoT devices must carry out as a function of the action signals, the environment signals, the interaction signals, or a combination thereof. In other words, a list of actions which the IoT devices must perform as a function of the location of the user 10, the type of interaction, which is being carried out with the environment at the interaction time instant or later, and the relative position of the user 10 with the objects 30. Such instructions are then sent to the relevant IoT device.

Preferably, the step of determining an action and/or interaction instruction 160 comprises the step of generating 162 one or more indication signals as a function of the list of actions. Next, the step of determining an interaction instruction 160 includes associating 163 the list of actions and indication signals with the interaction instruction.

It should be noted that the step of generating a set of action signals 130 is carried out by an algorithm based on neural networks and/or artificial intelligence and/or machine learning and/or computer vision. Preferably, the step of determining an action and/or interaction instruction is also conducted by neural network-based algorithms and/or artificial intelligence and/or machine learning and/or computer vision.

Advantageously, the method of artificial assistance 100 is characterized by uniformity and scalability. In fact, the method in question is applicable in any internal and/or external environment 20 without having to undergo architectural re-design interventions. The customization to new environments/objects only requires the acquisition of new data and training algorithms without further intervention to the architecture and/or the environment in which the method must operate.

In accordance with a preferred embodiment, the method comprises a step of training the algorithms used as a function of the environment 20.

The method of artificial assistance 100 comprises the step of showing 170a the action and/or interaction instruction on the augmented reality viewer 1020. Preferably, the method includes the step of projecting the environment signals and the interaction signals 171a onto the augmented reality viewer 1020. Thereby, the user is able to view and interact with the environment through the list of actions and the indication signals. Preferably, the user is able to actually and directly view and interact with the environment by means of the list of actions and the indication signals.

The projecting step 171a includes for example identifying by surrounding and/or indicating one or more objects 30 with which the user 10 will interact at the time instant following the time instant and/or showing a text message on the commands to be performed on an IoT device and/or indicating a path in the environment from one important zone to another. It should be noted that the step of projecting 171a includes highlighting objects 30 and/or elements (e.g., places or paths) in the environment actually present therein so that the user 10 can interact with them directly. In the presence of an alarm signal, the projecting step 171a includes showing the user an imminent hazard signal combined with an action and/or interaction instruction on the augmented reality viewer 1020. Preferably, the projecting step 171a, in the presence of an alarm signal, includes generating an acoustic signal by the artificial assistance device 1000 so as to warn the user 10.

Thereby, the method of artificial assistance facilitates the interaction of the user 10 with the environment.

Advantageously, the method of artificial assistance allows to implement automatic risk prevention (safety) and energy saving actions.

A further object of the present invention is an artificial assistance system 2000 for a user. The artificial assistance system 2000 comprises the artificial assistance device 1000 configured to implement the method of artificial assistance.

In accordance with a preferred embodiment, the artificial assistance system 2000 comprises one or more IoT devices 1100 positioned in the environment 20 and in signal communication with the artificial assistance device 1000, preferably by means of the control unit 1040 belonging to the artificial assistance system 2000. Preferably, the IoT devices 1100 are associated with the artificial assistance device 1000 and can be controlled by the user by means of the artificial assistance device 1000 itself. More preferably, the artificial assistance system 2000 comprises one or more alarm devices 1200 arranged in the environment 20 and in signal communication with the artificial assistance device 1000. In particular, the alarm devices 1200 are activatable by the activation signal generated by the artificial assistance device 1000 and/or the control unit 1040 manually by a user. It is thereby possible to warn one or more users 10 present in the environment 20.

## Claims

1. Method of artificial assistance (100) to a user (10) actual actions and/or interactions with an environment (20) and/or with objects present in the environment (20), said method (100) by means of a device of artificial assistance (1000) wearable by the user (10) and comprising a set of sensors (1010) configured to acquire information from an environment (20) and information related to the user (10) and an augmented reality viewer (1020) comprising the steps of:
- acquiring (110) by means of the set of sensors (1010) for each acquisition time instant a first data set related to the environment (20) and a second data set related to the user (10);
- sending (120) the first data set and the second data set to a data processing unit (1030) in signal communication with the device (1000);
- generating (130) as a function of the first data set and the second data set by means of algorithms resident in the data processing unit (1030) a set of action signals representative of a prediction of the user's action and/or interaction with the environment (20) at a time instant following the acquisition time instant;
- determining (160) an action and/or interaction instruction with the environment (20) as a function of the set of action signals;
- showing (170a) the action and/or interaction instruction on the augmented reality viewer (1020).

2. Method of artificial assistance (100) according to claim 1, wherein the step of generating a set of action signals (130) comprises the steps of:
- recognizing (131) at the acquisition time instant one or more objects (30) present in the environment (20) as a function of the first data set;
- determining (132) at the acquisition time instant a relative position between the user (10) and the one or more recognized objects (30) as a function of the second data set;
- determining (133) a future position between the user (10) and the one or more recognized objects (30) related to the time instant following the acquisition time instant;
- associating (134) the determined future position with the action signals.

3. Method of artificial assistance (100) according to claim 1 or 2, wherein the step of generating a set of action signals (130) comprises the steps of:
- identifying (135) at the acquisition time instant a reference point (PR) present in the environment as a function of the first data set;
- determining (136) at the acquisition time instant a location of the user (10) with respect to the identified reference point (PR);
- determining (137) a future location of the user with respect to the reference point (PR) related to the time instant following the acquisition time instant;
- associating (138) the determined future location with the action signals.

4. Method of artificial assistance (100) according to any one of claims 1 to 3, wherein the step of generating a set of action signals (130) comprises the steps of:
- recognizing (139) at the acquisition time instant a type of user's action and/or interaction (10) with the environment (20) among a plurality of types of actions and/or reference interactions as a function of the first data set and the second data set;
- determining (140) a future action and/or interaction of the user (10) with the environment related to the time instant following the acquisition time instant;
- associating (141) the determined future action and/or interaction with the action signals.

5. Method of artificial assistance (100) according to any one of claims 1 to 4, wherein the step of generating a set of action signals (130) comprises the steps of:
- receiving (142) a set of reference instructions;
- generating (143) the set of action signals as a function of the reference signal set, the first data set and the second data set.

6. Method of artificial assistance (100) according to any one of claims 1 to 5, wherein the step of determining an action and/or interaction instruction (160) comprises the steps of:
- drawing up (161) a list of actions and/or interactions which the user (10) must take as a function of the set of action signals;
- generating (162) one or more indication signals as a function of the list of actions and/or interactions;
- associating (163) the list of actions and/or interactions and the indication signals with the action and/or interaction instruction.

7. Method of artificial assistance (100) according to claim 6, wherein the step of showing on the augmented reality viewer (170a) the action and/or interaction instruction comprises the steps of:
- projecting (171a) on the augmented reality viewer (1020) the list of actions and/or interactions and the indication signals.

8. Method of artificial assistance (100) according to any one of claims 1 to 7, wherein the method comprises the step of:
- generating (180) as a function of the first data set and the second data set by means of algorithms resident in the data processing unit a set of environment signals representative of the environment (20) at the acquisition time instant;
- showing (170b) on the augmented reality viewer (1020) the environment signal set.

9. Method of artificial assistance (100) according to any one of claims 1 to 8, wherein the method comprises the step of:
- generating (190) as a function of the first data set and the second data set by means of algorithms resident in the data processing unit a set of action and/or interaction signals representative of one or more user interactions (10) with the environment (20) related to the acquisition time instant;
- showing (170c) on the augmented reality viewer (1020) the set of action and/or interaction signals.

10. Method of artificial assistance (100) according to any one of claims 1 to 9, wherein the step of generating a set of action signals (130) is carried out by an algorithm based on neural networks and/or artificial intelligence and/or machine learning and/or computer vision.

11. Device of artificial assistance (1000) to a user (10) configured to perform the method according to claims 1 to 10 and comprising:
- an augmented reality viewer (1020);
- a set of sensors (1010) configured to acquire information from an environment (20) and information related to the user (10);
- a data processing unit (1030) in signal communication with the augmented reality viewer (120) and with the set of sensors (1010).

12. System of artificial assistance (2000) to a user (10) comprising:
- the device of artificial assistance (1000) in accordance with claim 11;
- one or more IoT devices (1100) positioned in the environment (20) and in signal communication with the device of artificial assistance (1000).
